# EUROPÄISCHE PATENTSCHRIFT

(11) **EP 1 058 637 B1**
(45) Veröffentlichungstag und Bekanntmachung des Hinweises auf die Patenterteilung: **20.11.2002**
(21) Anmeldenummer: 99911720.3
(22) Anmeldetag: 27.02.1999
(51) Int. Cl.: B60T 8/36, F16K 31/06, F16K 27/02

(54) **ELEKTROMAGNETVENTIL**
ELECTROMAGNETIC VALVE
ELECTROVANNE

(30) Priorität: 03.03.1998 DE 19808826; 17.08.1998 DE 19837207
(43) Veröffentlichungstag der Anmeldung: 13.12.2000
(73) Patentinhaber: Continental Teves AG & Co. oHG, 60488 Frankfurt (DE)
(72) Erfinder: GOOSSENS, Andre, F., L., B-2840 Rumst (BE)
(86) Internationale Anmeldenummer: EP9901276
(87) Internationale Veröffentlichungsnummer: WO99044872

(56) Entgegenhaltungen:
- EP-A- 0 679 823
- DE-A- 19 504 883
- US-A- 5 460 437

## Beschreibung

Die Erfindung betrifft ein Elektromagnetventil nach dem Oberbegriff des Patentanspruchs 1.

Aus der DE 196 21 229 A1 gehen bereits Elektromagnetventile hervor, jeweils bestehend aus einem Gehäusegrundkörper zur Befestigung in einem Ventilaufnahmekörper, wobei auf dem Gehäusegrundkörper eines jeden Elektromagnetventils eine Ventilhülse hervorsteht, in der ein Magnetanker geführt ist. Mit dem Magnetanker wirkt jeweils ein Stößel zusammen, der ein Ventilschließglied aufweist, welches einem Ventilsitzkörper zugewandt ist. Ferner befindet sich auf dem Gehäusegrundkörper jeweils eine Ventilspule, die unter anderem durch die Ventilhülse geführt ist. Zur Herstellung des zum Betrieb der Elektromagnetventile erforderlichen Magnetkreises kontaktiert ein die Ventilspule umschließender Jochring in Axialrichtung der Ventile einen blockförmigen Ventilaufnahmekörper als auch den hierzu abgewandten Hülsen- bzw. Magnetkernbereich des jeweiligen Elektromagnetventils.

Die beschriebene Ventilbaugruppe hat jedoch den Nachteil, daß der Magnetkreis nur dann geschlossen ist, wenn der Ventilaufnahmekörper aus einem den Magnetfluß leitenden Material besteht. Ein weiterer Nachteil ist darin zu sehen, daß bei Verwendung einer nicht magnetischen Ventilhülse die Innenkontur des Jochrings an der radialen Kontaktfläche zur Ventilhülse entsprechend tief umzustülpen ist, um die magnetischen Verluste möglichst gering zu halten. Ein weiterer Nachteil ist darin zu sehen, daß zur Ableitung der von der Ventilspule erzeugten Wärme nur ein relativ kleiner Kontaktbereich zwischen dem Jochring und dem als Wärmesenke wirkenden Ventilaufnahmekörper besteht. Ferner bedarf es im Einzelfall besonderer Maßnahmen zur exakten Ventilhub- beziehungsweise Luftspalteinstellung, was bisher unter anderem die Einhaltung möglichst kleiner Passungs- bzw. Fertigungstoleranzen zur Befestigung des Stößels am Magnetanker erfordert.

In der US-A-5 460 437 wird ein in Grundstellung offenes Elektromagnetventil beschrieben, dessen Stößel sich unmittelbar an einer Magnetankerstirnfläche abstützt. Die Stößelposition ist demnach von den Fertigungstoleranzen der miteinander korrespondierenden Ventilteile als auch besonders von den Montagetoleranzen des Ventilsitzes im Gehäusegrundkörper und der auf den Gehäusegrundkörper aufgeschobenen Ventilhülse abhängig. In der Ausführung als in Grundstellung geschlossenes Elektromagnetventil ist der Stößel im Magnetanker angeordnet, so daß die Stößelbefestigung durch Fertigungs- als auch Montagetoleranzen beeinflußt wird.

Daher liegt der Erfindung die Aufgabe zugrunde, die Nachteile des vorgenannten Standes der Technik zu beheben und ein Elektromagnetventil zu schaffen, das sich durch besonders einfache Herstellung, insbesondere durch eine von Passungstoleranzen möglichst unabhängig Stößeleinstellung auszeichnet und das sich auch bei Bedarf mit einfachen Mitteln universell in seiner Betriebsweise verändern läßt.

Diese Aufgabe wird erfindungsgemäß für eine Elektromagnetventil der eingangs genannten Art mit den kennzeichnenden Merkmalen des Patentanspruchs 1 gelöst.

Weitere Merkmale, Vorteile und Anwendungsmöglichkeiten der Erfindung gehen im nachfolgenden aus der Beschreibung mehrerer Ausführungsbeispiele hervor.

Es zeigen:
- Fig. 1: ein in der Grundstellung stromlos geöffnetes Elektromagnetventil
- Fig. 2: ein in der Grundstellung stromlos geschlossenes Elektromagnetventil
- Fig. 3: ein in der Grundstellung stromlos geschlossenes Zweistufenventil
- Fig. 4: ein in der Grundstellung stromlos offenes Elektromagnetventil mit einer Überdruckventilfunktion
- Fig. 5: das von der Fig. 1 erwähnte stromlos offene Elektromagnetventil, erweitert um eine geräuschreduzierende Schaltblendenfunktion

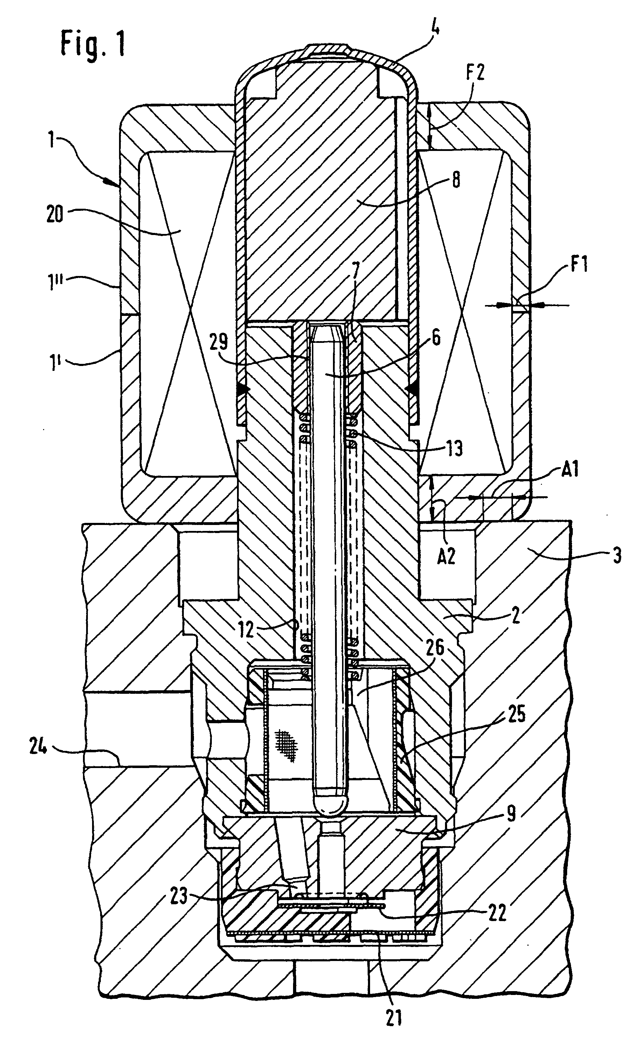

Die Fig. 1 zeigt in erheblich vergrößerter Darstellung im Querschnitt ein in der Grundstellung stromlos geöffnetes Elektromagnetventil, bestehend aus einem Gehäusegrundkörper 2 zur Befestigung in einem blockförmigen Ventilaufnahmekörper 3, der im vorliegenden Ausführungsbeispiel aus einem nicht magnetischen, vorzugsweise einer Leichtmetallegierung oder Kunststoff aufweisenden Werkstoff besteht. Der Gehäusegrundkörper 2 ist als rotationssymmetrisches Bauteil zum Zwecke der Befestigung im Ventilaufnahmekörper 3 mittels einer Selbstverstemmung versehen, wodurch sich eine im Durchmesser abgestufte Ventilpatrone ergibt, die einen vergleichsweise flaschenhalsförmigen Abschnitt aufweist, der die Funktion eines Magnetkerns übernimmt, welcher an der Oberfläche des Ventilaufnahmekörpers 3 übersteht. Auf diesem flaschenhalsförmigen Abschnitt ist eine Ventilhülse 4 aufgeschoben, in der ein Magnetanker 8 geführt ist. Mit dem Magnetanker 8 wirkt ein Stößel 6 zusammen, dessen kugelförmiges Ventilschließglied einem Ventilsitzkörper 9 zugewandt ist, der an der vom Magnetanker 8 abgewandten Stirnseite des Gehäusegrundkörpers 2 befestigt ist. Ferner befindet sich auf dem Gehäusegrundkörper 2 aufgesetzt eine Ventilspule 20, die von einem Jochring 1 umschlossen ist. Der Jochring 1 ist zweiteilig ausgeführt, wobei zur Wärmeableitung in Richtung des Ventilaufnahmekörpers 3 ein dem Gehäusegrundkörper 2 zugewandtes erstes Jochringteil 1' mit einer ersten Kontaktfläche A1 breitflächig am Ventilaufnahmekörper 3 aufliegt. Ferner weist das erste Jochringteil 1' auf Höhe der ersten Kontaktfläche A1 eine radial auf den Gehäusegrundkörper 2 gerichtete zweite Kontaktfläche A2 auf, die die erforderliche Magnetkreisverbindung herstellt. Das zweite Jochringteil 1" ist derart auf das erste Jochringteil 1' aufgesetzt, daß dessen axial gerichtete Kontaktfläche F1 am ersten Jochringteil 1' gleichfalls magnetkreisschließend anliegt. Ferner weist das zweite Jochringteil 1" eine auf den domförmigen Abschnitt der Ventilhülse 4 radial gerichtete weitere Kontaktfläche F2 auf, die gleichfalls für den notwendigen Magnetkreisschluß vorgesehen ist. Wie aus der Fig. 1 hervorgeht, sind beide Jochringteile 1', 1" spiegelsymmetrisch mit ihren Rändern aufeinander gerichtet. Damit beide Jochringteile 1', 1" miteinander in Kontakt bleiben, wird im vorliegenden Ausführungsbeispiel vorgeschlagen, daß der Jochring 1 von einer elastischen oder plastischen Masse umspritzt ist, die vorzugsweise den Jochring 1 mit der Spule 20 als Unterbaugruppe eines elektronischen Reglers vereinigt, so daß der Regler mit vorgenannten Teilen lediglich auf die Ventilhülse 4 aufzusetzen ist. Eine alternative Lagesicherung bietet sich durch die Verwendung einer auf den Ventildom 4 aufgesetzten Klemmscheibe an, wenn die Spule 20 und der Jochring 1 unmittelbar am Elektromagnetventil zu befestigen sind.

Der vorgeschlagene Jochring 1 zeichnet sich durch eine besonders einfache Herstellung aus, da auf die aus dem Stand der Technik bekannte Umstülpung der Innenkontur zur Bildung eines breitflächigen an der Ventilhülse 4 anliegenden Rands verzichtet werden kann. Hierbei kann die Kontaktfläche F2 und damit die Wandstärke des Jochrings 1 im Bereich der Ventilhülse 4 äußerst klein gewählt werden, wenn die Ventilhülse 4 aus einem ferritischen Material besteht. Bei Wahl einer ferritischen und damit magnetischen Ventilhülse 4 ergibt sich zwangsläufig durch die geringeren elektrischen Verluste eine erheblich verkürzte Ventilspule 20, so daß zwangsläufig kleinere Ventilabmessungen möglich werden.

Ein weiterer Vorteil zur Verwendung des vorgeschlagenen zweiteiligen Jochrings 1 besteht darin, daß unabhängig von der Verwendung eines den Magnetkreis leitenden oder nicht leitenden Materials für den Ventilaufnahmekörper 3 jeweils der gleiche Jochring 1 verwendet werden kann. Eine Notwendigkeit zur Verwendung einer zusätzlichen Magnetankerrückschlußscheibe zwischen dem Jochring 1 und dem Ventilaufnahmekörper 3 besteht nicht, wenn der Ventilaufnahmekörper 3 aus einem den Magnetfluß nicht leitenden Material besteht. Durch die Verwendung des vorgeschlagenen zweiteiligen Jochrings 1 ergibt sich ferner eine breitflächige Auflage des Jochringteils 1' am Ventilaufnahmekörper 3, so daß vorteilhafterweise ein direkter thermischer Kontakt und damit die erwünschte Wärmeableitung von der Ventilspule 20 in Richtung des Ventilaufnahmekörpers 3 sichergestellt ist.

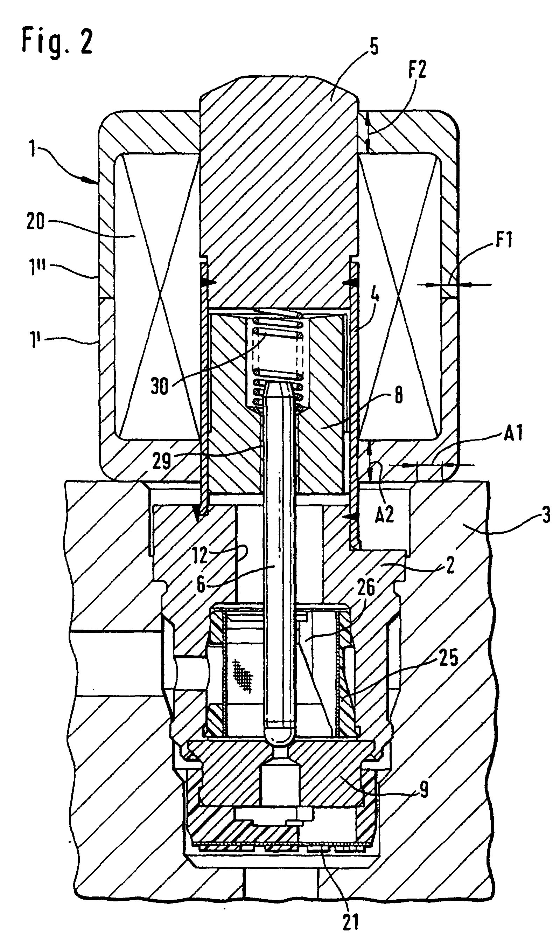

Der damit bisher beschriebene Jochring 1 ist wie die nachfolgenden Figuren 2 bis 5 zeigen, für unterschiedliche Bauformen von Elektromagnetventilen universell verwendbar.

Als weiteres für den Erfindungsgegenstand bedeutsames Merkmal soll Bezug nehmend auf die Ausführungsform des Elektromagnetventils nach Fig. 1 auf die Verwendung einer mit Gewindegängen 27 oder dergleichen versehene Buchse 7 verwiesen werden, die an dem Ende des Stößels 6 angebracht ist, der dem Magnetanker 8 zugewandt ist. Die Buchse 7 stützt sich an der Stirnfläche des Magnetankers 8 ab und führt gleichzeitig den Stößel 6 innerhalb der Durchgangsbohrung 12 im Gehäusegrundkörper 2. Hierbei bildet der Stößel 6 mit der Buchse 7 eine eigenständig handhabbare Unterbaugruppe, was durch einen Vormontageschritt geschieht. Eine weitere Vormontagegruppe wird durch den Gehäusegrundkörper 2, den Magnetanker 8 und der Ventilhülse 4 in Form einer eigenständig handhabbaren Unterbaugruppe gebildet.

Die Buchse 7 hat gewissermaßen sowohl die Aufgabe einer Gleitlagerbuchse als auch Einstellbuchse, da die Einstellung des Ventilhubes relativ einfach durch Verschieben des Stößels 6 in der reibschlüssig angebrachten Buchse 7 zustande kommt, nachdem der sogenannte Null-Hub des Elektromagnetventils durch Anlegen des Stößels 6 am Ventilsitzkörper 9 erreicht ist. Zur Einstellung des Ventilhubs muß die abbildungsgemäß zusammengeführte Ventilbaugruppe nicht zerlegt werden, da mittels eines durch die Öffnung im Ventilsitzkörper 9 eingeführten Einstelldorns der Stößel 6 innerhalb der Buchse 7 in Richtung auf den in Grundstellung auf Anschlag in der Ventilhülse 4 befindlichen Magnetanker 8 weitergedrückt wird. Die Buchse 7 als auch der Magnetanker 8 bestehen gegenüber dem Stößel 6 aus einem weicheren Werkstoff. Die daraus resultierenden Vorteile für die hierin beschriebenen Ventile werden in einer sich an die Figurenbeschreibung anschließenden zusammenfassung erläutert.

Aus der Fig. 1 geht ferner hervor, daß nach vollzogenem Einstellverfahren am Ventilsitzkörper 9 ein Plattenfilter angeclipst wird, in dem eine Rückschlagventilplatte 22 integriert ist, die bei Bedarf und damit auch Abhängigkeit von der Genauigkeit des Ätzverfahrens eine Blendenbohrung aufnimmt. Diese Rückschlagventilplatte 22 verschließt normalerweise bei einem aus Richtung des Plattenfilters 21 wirksamen Druck den im Ventilsitzkörper 9 eingelassenen Bypasskanal 23, so daß ausschließlich eine hydraulische Verbindung über die erwähnte Blende in der Rückschlagventilplatte 22 und der vom Stößel 6 freigegebenen Durchgangsbohrung 12 zum abbildungsgemäßen Querkanal 24 im Ventilaufnahmekörper 3 möglich ist.

Abschließend zu der Ausführungsform des Elektromagnetventils nach Fig. 1 soll noch auf die Vorzentrierung des Stößels 6 mittels des im Bereich der Durchgangsbohrung 12 gelegenen Ringfilters 25 hingewiesen werden, der über den Umfang verteilt in Richtung des Stößels 6 mehrere Rippen 26 aufweist. Diese Rippen 26 bilden gleichzeitig ein Widerlager für die auf den Stößel 6 aufgeschobene, an der Buchse 7 abstützenden Rückstellfeder 13. Schließlich soll noch auf die Verschweißung der ventilhülse 4 am Patronenhals des Gehäusegrundkörpers 2 hingewiesen werden, die dann erfolgt, wenn durch entsprechendes Verschieben der Ventilhülse 4 der gewünschte Magnetankerluftspalt eingestellt ist.

Eine weitere Anwendung der Erfindung geht aus der Beschreibung des Elektromagnetventils nach Fig. 2 hervor, das gleichfalls die beschriebene Vorzentrierung des Stößels 6 mittels des Ringfilters 25 nach Fig. 1 aufweist. Auch die gewählte Struktur und Abmessung des Gehäusegrundkörpers 2 ist mit der Ausführungsform nach Fig. 1 identisch, so daß im nachfolgenden nur die Unterschiede herausgestellt werden sollen. Auf den eingangs zu Fig. 1 erwähnten flaschenhalsförmigen Fortsatz des Gehäusegrundkörpers 2 kann verzichtet werden, wenn eine ferritische Ventilhülse 4 durch das untere Jochringteil 1' bis in den Ventilaufnahmekörper 3 ragt und dort mit dem Gehäusegrundkörper 3 beispielsweise verschweißt ist. Die Ventilhülse 4 wird auf der vom Gehäusegrundkörper 2 abgelegenen Stirnseite von einem stopfenförmigen Magnetkern 5 verschlossen, der vom zweiten Jochringteil 1" radial kontaktiert ist. Zwischen dem Magnetkern 5 und dem Grundgehäusekörper 2 ist der Magnetanker 8 mit dem Stößel 6 entlang der Ventilhülse 4 geführt, wobei sich die Zentrierung des Stößels 6 im wesentlichen durch die Rippen 26 des Ringfilters 25 ergibt.

Zur Herstellung des Elektromagnetventils sind der Magnetkern 5 mit der Ventilhülse 4 und der Magnetanker 8 zu einer Vormontageeinheit und damit zu einer eigenständig handhabbaren Unterbaugruppe zusammengefaßt. Eine weitere Vormontageeinheit bildet der Ventilsitzkörper 9 mit dem Gehäusegrundkörper 2, wobei sich der Stößel 6 innerhalb des Magnetankers 8 zur Einstellung des Restluftspaltes verschieben läßt. Hierzu ist innerhalb des Magnetankers eine Gewindebohrung vorgesehen. Ein ähnliches Prinzip ist aus der Ausführungsform nach Fig. 1 bekannt, indem die Buchse 7 mit einer Gewindebohrung, das heißt mit Gewindegängen 29 oder dergleichen versehen ist.

Die Einstellung des Ventilhubes für das Elektromagnetventil nach Fig. 2 geschieht auf einfache Weise durch Weiterdrücken des Stößels 6 in den Magnetanker 8 nach vorheriger Null-Hub-Einstellung des Ventils durch Andrücken des Ventilsitzkörpers 9 auf den Stößel 6. Die Einstellung des Ventilhubes mittels eines Andrückwerkzeuges erfolgt einfach durch Entfernen des Ventilsitzkörpers 9, da in der Regel die Öffnung im Ventilsitzkörper 9 zum Hindurchführen des Andrückwerkzeuges zu klein ist.

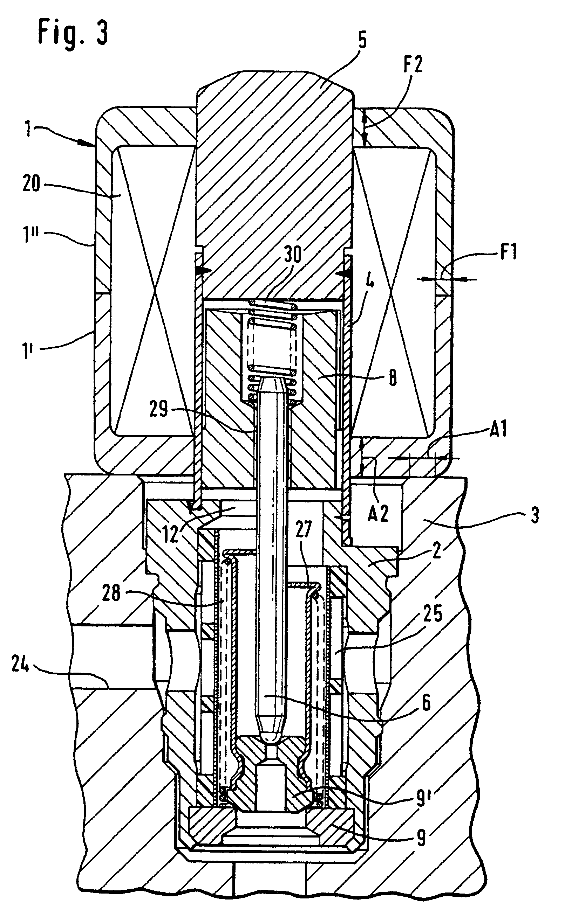

Basierend auf der vorangegangenen Ausführungsvariante nach Fig. 2 soll hierzu im nachfolgenden eine Ausführungsvariante gemäß Fig. 3 erläutert werden. Das Elektromagnetventil nach Fig. 3 unterscheidet sich gegenüber den Einzelheiten des Elektromagnetventils 2 durch die Möglichkeit, bedarfsgerecht unterschiedliche Durchlaßquerschnitte freizugeben, indem zwischen dem Ventilsitzkörper 9 und dem Stößel 6 ein Ventilkolben 9' angeordnet ist, der abbildungsgemäß unter Wirkung der zwischen dem Magnetanker 8 und dem Magnetkern 5 angeordneten Feder 26 vom Stößel 6 dichtend auf den Ventilsitzkörper 9 gepreßt wird. Hierdurch verschließt gleichzeitig das am Stößel 6 angebrachte Ventilschließglied die relativ kleinkalibrierte Durchgangsöffnung im Ventilkolben 9'. Dieser Ventilkolben 9' weist ein topfförmiges Dünnblechteil 27 auf, an dem sich eine in Öffnungsrichtung des ventilkolbens 9' wirksame Feder 28 abstützt. Zwischen der Feder 28 und der Innenwandung des Gehäusegrundkörpers 2 befindet sich ein an sich bekannter Ringfilter 25, der je nach Art der Befestigung der Ventilhülse 4 am Gehäusegrundkörper 2 in seiner Länge und damit hinsichtlich seiner Filterfläche an die Gehäuseform anzupassen ist. Die Herstellung des Magnetkreises als auch die Unterbaugruppen zur Bildung von Vormontageeinheiten entsprechen den bereits zu Fig. 2 geschilderten Einzelheiten, womit sich eine nochmalige Darstellung erübrigt. Durch die zusätzliche Anordnung des Ventilkolbens 9' und den damit zusammenwirkenden Einzelheiten ergibt sich bei gleichem Außendurchmesser des Gehäusegrundkörpers 2 eine relativ dünne Gehäusewandstärke im Bereich des Ventilsitzkörpers 9, weshalb die Befestigung des Ventilsitzkörpers 9 im Gehäusegrundkörper 2 durch eine Umbördelung geschehen, die vorzugsweise mittels Wälznieten oder Rollieren zu vollziehen ist. Sofern der Ventilsitzkörper 9 aus einem nicht gehärteten Material besteht, kann eine Laserschweißung erfolgen. Durch die Ausführung des in Grundstellung geschlossenen Elektromagnetventils als sogenanntes Zweistufenventil, läßt sich wiederum ohne Demontage des Ventilsitzkörpers 9 der Ventilhub relativ einfach durch die weite Öffnung des Ventilsitzkörpers 9 mittels eines Andrückwerkzeuges einstellen, wie in der Ausführungsform nach Fig. 1 beschrieben ist.

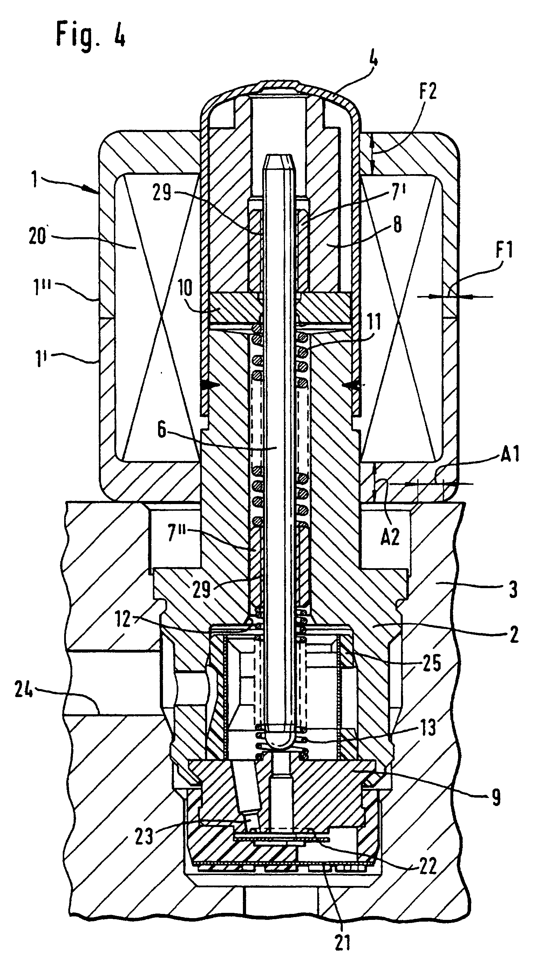

In der Fig. 4 wird gleichfalls wie in der Fig. 1 eine in der Grundstellung elektromagnetisch nicht.erregte, offene Ventilbaugruppe beschrieben, die zusätzlich mit einer Überdruckventilfunktion versehen ist. Hierzu ist auf dem Stößel 6 eine erste Buchse 7' und eine zweite Buchse 7" aufgepreßt, zwischen denen eine Magnetankeranschlagscheibe 10 und eine Überdruckventilfeder 11 beweglich angeordnet sind, so daß vorgenannte Bauteile mit dem auf die Magnetankeranschlagscheibe 10 aufgesetzten Magnetanker 8 zu einer eigenständig handhabbaren, vormontagefähigen Unterbaugruppe zusammengefaßt sind. Die erste Buchse 7' ist an dem sich in den Magnetanker 8 erstrekkenden Stößelende angebracht. Die zweite Buchse 7" ist entfernt von der ersten Buchse 7' in einer Durchgangsbohrung 12 des Gehäusegrundkörpers 2 geführt. Ferner befindet sich zwischen der zweiten Buchse 7" und dem Ventilsitzkörper 9 eine Rückstellfeder 13 eingespannt, die im elektrisch stromlosen Zustand des Ventils den Stößel 6 vom Ventilsitzkörper 9 abhebt. Die domförmige ferritische Ventilhülse 4 ist gleichfalls wie in allen vorangegangenen Ausführungsbeispielen am Gehäusegrundkörper 2 verschweißt, jedoch mit dem Unterschied, daß die Schweißung erst dann stattfinden kann, wenn der Magnetankerrestluftspalt und die Ventilhubeinstellung vollzogen sind.

Die Funktion des Elektromagnetventils nach Fig. 4 unterscheidet sich von der Darstellung nach Fig. 1 dadurch, daß im elektromagnetisch erregten, geschlossenen Zustand des Ventils beim Überschreiten eines unterhalb des Ventilsitzkörpers 9 anstehenden Druckniveaus der Ventilstößel 6 relativ zum Magnetanker 8 und relativ zur Magnetankeranschlagscheibe 10 im Öffnungssinne entgegen der Wirkung der Überdruckventilfeder 11 vom Ventilsitz abgehoben wird, womit ein ungehinderter Druckausgleich in Richtung der Querbohrung 24 gewährleistet ist.

Soweit auch bezüglich Fig. 4 einzelne bauliche Merkmale nicht beschrieben sind, so sind sie bereits Gegenstand der erläuterten Ventilausführungsform nach Fig. 1.

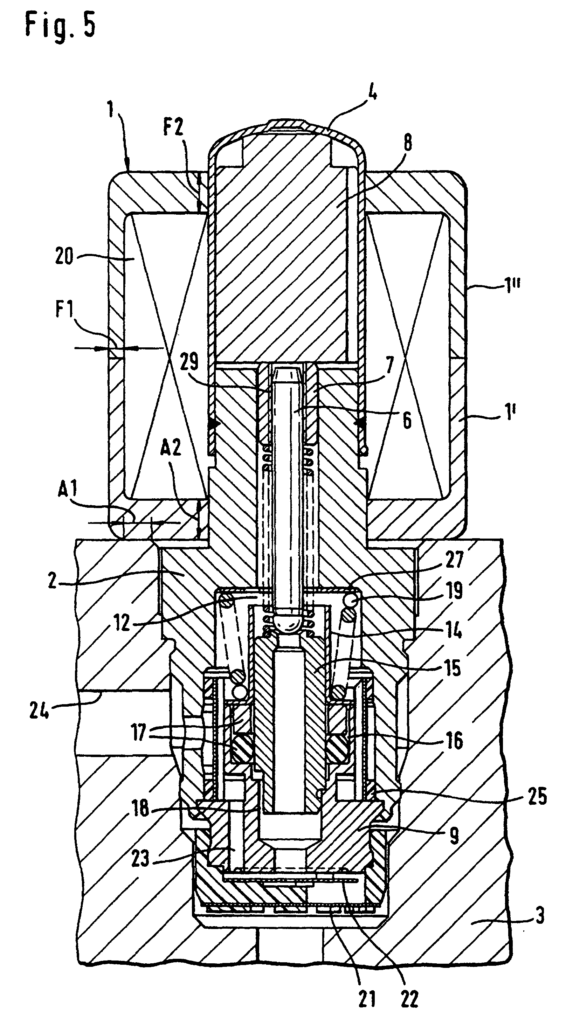

Auch das Elektromagnetventil nach Fig. 5 ist in wesentlichen Elementen baugleich mit dem Elektromagnetventil nach Fig. 1 oder Figur 4, so daß im nachfolgenden nur die Unterschiede der Ausführungsform nach Fig. 5 gegenüber Fig. 1 herausgestellt werden sollen. Der maßgebliche Unterschied ist darin zu sehen, daß zwischen dem Gehäusegrundkörper 2 und dem Ventilsitzkörper 9 in einem erweiterten Abschnitt der Durchgangsbohrung 12 eine differenzdruckabhängig betätigbarer, mit einer Blendenfunktion versehener Schaltkolben 14 axial beweglich angeordnet ist, der auf einem am Ventilsitzkörper 9 angebrachten Schaft 15 zentriert ist. Der hülsenförmige Schaft 15 nimmt gleichzeitig den Ventilsitz auf, an dem der Stößel 6 bei elektromagnetischer Erregung anliegt. Zwischen dem Schaft 15 und dem Ventilsitzkörper 9 ist eine Ringnut 16 vorgesehen, die ein Dichtungspaket 17 aufnimmt. In die Ringnut 16 mündet zur hydraulischen Beaufschlagung des Dichtungspakets 17 und damit zur Betätigung des Schaltkolbens 14 ein Druckmittelkanal 18 ein, der zu der unterhalb des Ventilsitzkörpers 9 gelegenen Druckmittelquelle führt. Der Schaltkolben 14 ist mittels einer sich im Gehäusegrundkörper 2 abstützenden Feder 19 auf das Dichtungspaket 17 gepreßt. Zur Bauraumoptimierung ist der Schaltkolben 14 als dünnwandige Schiebehülse ausgeführt, wobei diese mit dem Dichtungspaket 17 im Ventilsitzkörper 9 und der Feder 19 eine vormontierte, eigenständig handhabbare Unterbaugruppe bildet. Das Dichtungspaket 17 besteht im wesentlichen aus einem O-Ring und einem Backring, jedoch sind hierzu auch andere Alternativen denkbar. Wie auch bereits zu der Ausführungsform nach Fig. 1 angegeben, bildet in Figur 5 der Stößel 6 mit der Buchse 7 eine Vormontageeinheit.

Die für die Funktion des Schaltkolbens 14 notwendige Hauptblende wird von einem Schlitz in einer dünnen, vorzugsweise geätzten Platte 27 gebildet, die zwischen der Feder 19 und dem Absatz der Durchgangsbohrung 12 positioniert ist. An dieser Platte 27 gelangt der dünnwandige Stirnflächenbereich des Schaltkolbens 14 zur Anlage, wenn in der geschlossenen Stellung des Stößels 6 das Druckniveau in der Querbohrung 24 unter das Niveau der auf Seite des Plattenfilters 21 gelegenen Druckmittelquelle fällt. Beim erneuten elektromagnetisch erregten Öffnen des Stößels 6 gelangt dann das Druckmittel über die durch den Schlitz in der Platte 27 gebildete Blende zum Querkanal 24.

Soweit nicht auf weitere abbildungsgemäße Einzelheiten eingegangen wird, sind entsprechende Bauteile aus den vorangegangenen Beschreibungsteilen der verschiedenen Ventilvarianten gleichbedeutend zu entnehmen.

In der Zusammenschau aller bisher beschriebenen Ausführungsformen von Elektromagnetventilen werden nunmehr abschließend die wesentlichen Merkmale der Erfindung kompremiert aufgeführt. Diese sind:
- der Gehäusegrundkörper 2, die Ventilhülse 4, der Magnetanker 8, der Stößel 6 und der Jochring 1 sind als vormontierte Unterbaugruppen ausgebildet, die für unterschiedliche Ventilfunktionen (siehe Fig.1-5) gleichermaßen verwendet werden können und damit gruppenweise als auch einzeln untereinander austauschbar sind,
- der Ventilaufnahmekörper 3 weist zur Befestigung des Gehäusegrundkörper 2 eine Einheitsbohrung auf, wobei für alle Ventilbauformen (siehe Fig.1-5) infolge gleicher Abmessungen jeweils der gleiche Gehäusegrundkörper 2 universell verwendet werden kann,
- zur Endmontage der Ventile sind die Unterbaugruppen automatengerecht in einer einzigen Montagerichtung zusammengefügt,
- der Werkstoff des Magnetankers 8 ist jeweils weicher als der des Stößels 6, wobei entweder direkt im Magnetanker oder in einer separat dazu angeordneten Buchse 7 Gewindegänge 29 oder Rillen eingebracht sind. Hierdurch kann vorteilhaft die Preßpassung als auch die Passungstoleranz viel großzügiger gewählt werden, ohne daß sich die Verschiebekraft beim Einpressen als auch Ausdrücken des Stößels 6 im Magnetanker 8 maßgeblich ändert. Oberflächenbeschädigungen an den Preßpassungsstellen unterbleiben vorteilhafterweise und äußerer Abrieb ist gleichfalls ausgeschlossen, da derartige Partikel von den Gewindegängen 29 aufgenommen wird. Das Verhältnis des Innendurchmessers der Buchse 7 bzw. des Magnetankers 8 zum Außendurchmesser des Stößels 6 ist folglich von untergeordneter Bedeutung für den Montage- und Einstellvorgang des Ventils.
Für die Erfindung zweckmäßig sind ferner der zweiteilige Jochring 1, die als Einstell- und Gleitlagerbuchse verwendbaren Buchsen 7', 7" sowie der Einsatz von ausschließlich ferritischen Ventilhülsen 4 und zwar unabhängig vom Aufbau und Funktion des jeweils gewählten Ventils.

Die beschriebenen Elektromagnetventile werden vorzugsweise für Radschlupf- und Fahrdynamikregelsysteme in Kraftfahrzeugbremsanlagen verwendet.

### Bezugszeichenliste

- 1: Jochring
- 1',1": Jochringteil
- 2: Gehäusegrundkörper
- 3: Ventilaufnahmekörper
- 4: Ventilhülse
- 5: Magnetkern
- 6: Stößel
- 7,7',7": Buchse
- 8: Magnetanker
- 9': Ventilkolben
- 9: Ventilsitzkörper
- 10: Anschlagscheibe
- 11: Überdruckventilfeder
- 12: Durchgangsbohrung
- 13: Rückstellfeder
- 14: Schaltkolben
- 15: Schaft
- 16: Ringnut
- 17: Dichtungspaket
- 18: Druckmittelkanal
- 19: Feder
- 20: Ventilspule
- 21: Plattenfilter
- 22: Rückschlagventilplatte
- 23: Bypasskanal
- 24: Querbohrung
- 25: Ringfilter
- 26: Rippen
- 27: Dünnpreßteil
- 28: Feder
- 29: Gewindegänge

## Patentansprüche

1. Elektromagnetventil, bestehend aus einem Gehäusegrundkörper (2) zur Befestigung in einem Ventilaufnahmekörper (3), mit einer auf dem Gehäusegrundkörper (2) positionierten Ventilhülse (4), in der ein Magnetanker (8) geführt ist, mit einem mit dem Magnetanker (8) zusammenwirkenden Stößel (6), dessen Ventilschließglied einem Ventilsitzkörper (9) zugewandt ist, sowie mit einem Jochring (1), der eine auf dem Gehäusegrundkörper (2) aufgesetzte Ventilspule (20) umschließt, wobei der Gehäusegrundkörper (2), die Ventilhülse (4), der Magnetanker (8), der Stößel (6) und der Jochring (1) als vormontierte ünterbaugruppen ausgebildet sind, wobei der Ventilaufnahmekörper (3) zur Befestigung des Gehäusegrundkörper (2) eine Einheitsbohrung aufweist, und wobei zur Endmontage des Ventils die Unterbaugruppen in einer einzigen Montagerichtung zusammengefügt sind, **dadurch gekennzeichnet, daß** der Stößel (6) unter Einhaltung einer gleichbleibenden Stößelverschiebekraft in Gewindegängen (29) oder Rillen, die in einer Buchse (7) oder unmittelbar im Magnetanker (8) angeordnet sind, ein- und ausdrückbar ist, wobei der Magnetanker (8) aus einem weicheren Material besteht als der Stößel (6).

2. Elektromagnetventil nach Anspruch 1, **dadurch gekennzeichnet, daß** der Innendurchmesser der Bohrung im Magnetanker (8) größer ist als der Kerndurchmesser der Gewindegänge (29).

3. Elektromagnetventil nach Anspruch 1, **dadurch gekennzeichnet, daß** auf dem Stößel (6) die Buchse (7) befestigt ist, die sich am Magnetanker (8) abstützt und die im Gehäusegrundkörper (2) geführt ist.

4. Elektromagnetventil nach Anspruch 3, **dadurch gekennzeichnet, daß** der Stößel (6) mit der Buchse (7) eine eigenständig handhabbare Unterbaugruppe bildet.

5. Elektromagnetventil nach Anspruch 1, **dadurch gekennzeichnet, daß** zur Herstellung einer Überdruckventilfunktion für ein in Grundstellung stromlos geöffnetes Elektromagnetventil auf dem Stößel (6) die erste und eine zweite Buchse (7',7") aufgepreßt sind, daß zwischen der ersten und zweiten Buchse (7',7") beweglich eine Magnetankeranschlagscheibe (10) sowie eine Überdruckventilfeder (11) am Stößel (6) angeordnet sind, wobei vorgenannte Bauteile mit dem Magnetanker (8) zu einer eigenständig handhabbaren Unterbaugruppe zusammengefaßt sind.

6. Elektromagnetventil nach Anspruch 5, **dadurch gekennzeichnet, daß** die erste Buchse (7') an dem sich in dem Magnetanker (8) erstreckenden Stößelende angebracht ist, die sich an der der Überdruckventilfeder (11) entgegengelegenen Stirnseite der Magnetanker-Anschlagscheibe (10) abstützt.

7. Elektromagnetventil nach Anspruch 5, **dadurch gekennzeichnet, daß** die zweite Buchse (7") entfernt von der ersten Buchse (7') in einer Durchgangsbohrung (12) des Gehäusegrundkörpers (2) geführt ist, und daß zwischen der zweiten Buchse (7") und dem Ventilsitzkörper (9) eine Rückstellfeder (13) eingespannt ist, welche das Elektromagnetventil im elektrisch stromlosen Zustand in der offenen Grundstellung positioniert.

8. Elektromagnetventil nach Anspruch 1, **dadurch gekennzeichnet, daß** der Jochring (1) zweiteilig ausgeführt ist, wobei ein dem Gehäusegrandkörper (2) zugewandtes erstes Jochringteil (1') mit einer ersten Kontaktfläche (A1) axial am Ventilaufnahmekörper (3) anliegt, und daß das erste Jochringteil (1') mit einer radial gerichteten zweiten Kontaktfläche (A2) entweder zum Betrieb eines in Grundstellung stromlos geöffnetes Elektromagnetventil am Gehäusegrundkörper (2) oder zum Betrieb eines in Grundsteilung stromlos geschlossenes Elektromagnetventil an der Ventilbülse (4) anliegt.

9. Elektromagnetventil nach Anspruch 8, **dadurch gekennzeichnet, daß** ein zweites Jochringteil (1") auf das erste Jochringteil (1') derart aufgesetzt ist, daß dessen axial gerichtete Kontaktfläche (F1) am ersten Jochringteil (1') anliegt, und daß das zweite Jochringteil (1") mit einer radial gerichteten weiteren Kontaktfläche (F2) zum Betrieb eines in Grundstellung stromlos geöffneten Elektromagnetventils entweder an der Ventilhülse (4) oder zu Betrieb eines in Grundstellung stromlos geschlossenen Elektromagnetventils an einem die Ventilhülse (4) verschließenden Magnetkern (5) anliegt.

10. Elektromagnetventil nach Anspruch 1, **dadurch gekennzeichnet, daß** zur Herstellung eines in Grundstellung stromlos geöffneten Elektromagnetventils die am Gehäusegrundkörper (2) befestigte Ventilhülse (4) mit dem darin befindlichen Magnetanker (8) eine eigenständig handhabbare Unterbaugruppe bildet.

11. Elektromagnetventil nach Anspruch 1, **dadurch gekennzeichnet, daß** zwecks Herstellung eines in der Grundstellung stromlos geschlossenen Elektromagnetventils der Magnetkern (5) mit der Ventilhülse (4) und dem Magnetanker (8) zu einer eigenständig handhabbaren Unterbaugruppe zusammengefaßt sind, die eine Vormontageeinheit bilden.

12. Elektromagnetventil nach Anspruch 11, **dadurch gekennzeichnet, daß** der Magnetkern (5) in die Ventilhülse (4) eingepreßt und vorzugsweise mittels Schweißung unlösbar verbunden ist.

13. Elektromagnetventil nach Anspruch 1, **dadurch gekennzeichnet, daß** der Ventilsitzkörper (9) mit dem Gehäusegrundkörper (2) zu einer eigenständig handhabbaren Unterbaugruppe zusammengefaßt sind, die eine Vormontageeinheit für ein in der Grundstellung stromlos geschlossenes Elektromagnetventil bilden.

14. Elektromagnetventil nach Anspruch 9, **dadurch gekennzeichnet, daß** beide Jochringteile (1',1") nach dem Zusammenfügen zwecks Magnetschluß von einer Umspritzung zusammengepreßt und lagefixiert umschlossen sind.

15. Elektromagnetventil nach Anspruch 1, **dadurch gekennzeichnet, daß** in einer zwischen dem Gehäusegrundkörper (2) und dem Ventilsitzkörper (9) gelegenen Durchgangsbohrung (12) ein differenzdruckabhängiger, mit einer Blendenbohrung versehener Schaltkolben (14) axial beweglich angeordnet ist.

16. Elektromagnetventil nach Anspruch 15, **dadurch gekennzeichnet, daß** der Schaltkolben (14) auf einem Schaft (15) des Ventilsitzkörpers (9) geführt ist, der den Ventilsitz konzentrisch zu dem Ventilschließglied aufweisenden Stößel (6)ausrichtet.

17. Elektromagnetventil nach Anspruch 16, **dadurch gekennzeichnet, daß** zwischen dem Schaft (15) und dem Ventilsitzkörper (9) eine Ringnut (16) zur Aufnahme eines Dichtungspakets (17) vorgesehen ist.

18. Elektromagnetventil nach Anspruch 17, **dadurch gekennzeichnet, daß** in die Ringnut (16) zur hydraulischen Beaufschlagung des Dichtungspakets (17) ein Druckmittelkanal (18) führt.

19. Elektromagnetventil nach Anspruch 15, **dadurch gekennzeichnet, daß** der Schaltkolben (14) mittels einer sich im Gehäusegrundkörper (2) abstützenden Feder (19) auf ein Dichtungspaket (17) gepreßt ist.

20. Elektromagnetventil nach Anspruch 15, **dadurch gekennzeichnet, daß** der Schaltkolben (14) als dünnwandige Schiebehülse ausgeführt ist, die in der Durchgangsbohrung (12) an einer mit einer Blende versehenen Platte (27) anlegbar ist.

21. Elektromagnetventil nach Anspruch 17, **dadurch gekennzeichnet, daß** der Ventilsitzkörper (9) das Dichtungspaket (17) mit dem Schaltkolben (14) und der Feder (19) als vormontierte, eigenständig handhabbare Unterbaugruppe aufnimmt.

## Claims

1. Electromagnetic valve, comprised of a housing base member (2) for attachment in a valve accommodating member (3), with a valve sleeve (4) in which a magnetic armature (8) is guided being positioned on the housing base member (2), with a tappet (6) interacting with the magnetic armature (8) and having a valve closure member that faces a valve seat member (9), as well as with a yoke ring (1) that encompasses a valve coil (20) seated on the housing base member (2), wherein the housing base member (2), the valve sleeve (4), the magnetic armature (8), the tappet (6), and the yoke ring (1) are designed as pre-assembled subassemblies, wherein the valve accommodating member (3) includes a standard type of bore for the attachment of the housing base member (2), and wherein for the final assembly of the valve, the subassemblies are joined in one single direction of assembly,
**characterized in that** the tappet (6) is adapted to be pushed in and out of threads (29) or grooves which are arranged in a bushing (7) or directly in the magnetic armature (8), with a constant tappet displacement force maintained, and the magnetic armature (8) is made of a material softer than that of tappet (6).

2. Electromagnetic valve as claimed in claim 1,
**characterized in that** the inside diameter of the bore in the magnetic armature (8) is larger than the root diameter of the threads (29).

3. Electromagnetic valve as claimed in claim 1,
**characterized in that** the bushing (7) is secured to the tappet (6) and is supported on the magnetic armature (8) and guided in the housing base member (2).

4. Electromagnetic valve as claimed in claim 3,
**characterized in that** the tappet (6) with the bushing (7) forms a subassembly which can be handled independently.

5. Electromagnetic valve as claimed in claim 1,
**characterized in that** for providing a pressure relief valve function for an electromagnetic valve which is open in its de-energized initial position, the first and second bushing (7', 7") are pressed onto the tappet (6), **in that** a magnetic armature stop plate (10) and a pressure relief valve spring (11) are arranged on the tappet (6) so as to be movable between the first and the second bushing (7', 7"), with the mentioned components being grouped with the magnetic armature (8) to form a subassembly which can be handled independently.

6. Electromagnetic valve as claimed in claim 5,
**characterized in that** the first bushing (7') is arranged on the tappet end which extends into the magnetic armature (8) and is supported on the front surface of the magnetic armature stop plate (10) opposite to the pressure relief valve spring (11).

7. Electromagnetic valve as claimed in claim 5,
**characterized in that** the second bushing (7") remote from the first bushing (7') is guided in a through-bore (12) of the housing base member (2), and **in that** a resetting spring (13) is compressed between the second bushing (7") and the valve seat member (9) and, in the electrically de-energized condition, positions the electromagnetic valve in the open initial position.

8. Electromagnetic valve as claimed in claim 1,
**characterized in that** the yoke ring (1) has a bipartite design, with a first yoke ring portion (1') that faces the housing base member (2) abutting with a first contact surface (A1) axially on the valve accommodating member (3), and **in that** the first yoke ring portion (1') with a radially directed second contact surface (A2) either abuts on the housing base member (2) for the operation of an electromagnetic valve that is open in its de-energized initial position or on the valve sleeve (4) for the operation of an electromagnetic valve which is closed in its de-energized initial position.

9. Electromagnetic valve as claimed in claim 8,
**characterized in that** a second yoke ring portion (1") is so seated onto the first yoke ring portion (1') that its axially directed contact surface (F1) abuts on the first yoke ring portion (1'), and **in that** the second yoke ring portion (1") with a radially directed further contact surface (F2) either abuts on the valve sleeve (4) for the operation of an electromagnetic valve that is open in its de-energized initial position or on a magnetic core (5) that closes the valve sleeve (4) for the operation of an electromagnetic valve which is closed in its de-energized initial position.

10. Electromagnetic valve as claimed in claim 1,
**characterized in that** the valve sleeve (4) that is secured to the housing base member (2) along with the magnetic armature (8) incorporated therein forms a subassembly which can be handled independently for the manufacture of an electromagnetic valve that is open in its de-energized initial position.

11. Electromagnetic valve as claimed in claim 1,
**characterized in that** the magnetic ore (5) along with the valve sleeve (4) and the magnetic armature (8) are grouped in a subassembly which can be handled independently and forms a pre-assembly unit for the manufacture of an electromagnetic valve that is closed in its de-energized initial position.

12. Electromagnetic valve as claimed in claim 11,
**characterized in that** the magnetic core (5) is pressed into the valve sleeve (4) and undetachably connected, preferably by welding.

13. Electromagnetic valve as claimed in claim 1,
**characterized in that** the valve seat member (9) along with the housing base member (2) are grouped in a subassembly which can be handled independently and forms a pre-assembly unit for an electromagnetic valve that is closed in its de-energized initial position.

14. Electromagnetic valve as claimed in claim 9,
**characterized in that** both yoke ring portions (1', 1") after their joining operation are compressed by injection-coating and encompassed in a position-fixed manner for closing a magnetic circuit.

15. Electromagnetic valve as claimed in claim 1,
**characterized in that** an operating piston (14) which is responsive to the differential pressure and has an orifice bore is axially movably arranged in a through-bore (12) interposed between the housing base member (2) and the valve seat member (9).

16. Electromagnetic valve as claimed in claim 15,
**characterized in that** the operating piston (14) is guided on a stem (15) of the valve seat member (9) which aligns the valve seat concentrically relative to the tappet (6) that includes the valve closure member.

17. Electromagnetic valve as claimed in claim 16,
**characterized in that** an annular groove (16) to accommodate a stack of gaskets (17) is provided between the stem (15) and the valve seat member (9).

18. Electromagnetic valve as claimed in claim 17,
**characterized in that** a pressure fluid channel (18) leads into the annular groove (16) for the hydraulic application of the stack of gaskets (17).

19. Electromagnetic valve as claimed in claim 15,
**characterized in that** the operating piston (14) is pressed onto the stack of gaskets (17) by means of a spring (19) which is supported in the housing base member (2).

20. Electromagnetic valve as claimed in claim 15,
**characterized in that** the operating piston (14) is configured as a thin-wall sliding sleeve which, in the through-bore (12), is movable into abutment with a plate (27) that includes an orifice.

21. Electromagnetic valve as claimed in claim 17,
**characterized in that** the valve seat member (9) accommodates the stack of gaskets (17) with the operating piston (14) and the spring (19) as a pre-assembled subassembly which can be handled independently.

## Revendications

1. Valve à électro-aimant, constituée d'un corps de base de boîtier (2) servant à la fixation dans un corps de réception de valve (3), comprenant un manchon de valve (4), qui est positionné sur le corps de base formant boîtier (2) et dans lequel une armature mobile d'électroaimant (8) est guidée, une tige-poussoir (6), qui coopère avec l'armature mobile d'électroaimant (8) et dont un obturateur de valve fait face à un corps de siège de valve (9), et une culasse annulaire (1) qui entoure une bobine de valve (20) posée pardessus le corps de base de boîtier (2), tandis que le corps de base formant boîtier (2), le manchon de valve (4), l'armature mobile d'électroaimant (8), la tige-poussoir (6) et la culasse annulaire (1) sont réalisés sous forme de sous-groupes structurels pré-assemblés, que le corps de réception de valve (3) comporte un alésage unitaire en vue de la fixation du corps de base de boîtier (2) et que les sous-groupes structurels sont assemblés suivant une direction de montage unique pour le montage final de la valve, **caractérisée en ce que** la tige-poussoir (6) peut être enfoncée et peut être repoussée dans des filets de filetage (29) ou des cannelures qui sont situés dans une douille (7) ou directement dans l'armature mobile d'électroaimant (8) en maintenant une force de déplacement de tige-poussoir restant constante, l'armature mobile d'électroaimant (8) étant en un matériau moins dur que la tige-poussoir (6).

2. Valve à électro-aimant suivant la revendication 1, **caractérisée en ce que** le diamètre intérieur de l'alésage ménagé dans l'armature mobile d'électroaimant (8) est supérieur au diamètre à fond de filet des filets de filetage (29).

3. Valve à électro-aimant suivant la revendication 1, **caractérisée en ce que** la douille (7), qui prend appui sur l'armature mobile d'électroaimant (8) et qui est guidée dans le corps de base formant boîtier (2), est fixée sur la tige-poussoir (6).

4. Valve à électro-aimant suivant la revendication 3, **caractérisée en ce que** la tige-poussoir (6) constitue avec la douille (7) un sous-groupe structurel pouvant être manipulé en propre.

5. Valve à électro-aimant suivant la revendication 1, **caractérisée en ce que**, pour la réalisation d'une fonction de valve de surpression pour une valve à électro-aimant ouverte en l'absence de courant en position de base, la première et une seconde douilles (7', 7") sont emboîtées à force pardessus la tige-poussoir (6), **en ce qu'**une rondelle de butée d'armature mobile d'électroaimant (10) et un ressort de valve de surpression (11) sont disposés sur la tige-poussoir (6) d'une manière mobile entre la première et la seconde douilles (7', 7"), les éléments structurels indiqués étant assemblés avec l'armature mobile d'électroaimant (8) pour donner un sous-groupe structurel pouvant être manipulé en propre.

6. Valve à électro-aimant suivant la revendication 5, **caractérisée en ce que** la première douille (7') est montée sur l'extrémité d'aboutement, s'étendant dans l'armature mobile d'électroaimant (8), en prenant appui sur la face frontale de la rondelle de butée d'armature mobile d'électroaimant (10) qui est située à l'opposé du ressort de valve de surpression (11).

7. Valve à électro-aimant suivant la revendication 5, **caractérisée en ce que** la seconde douille (7") est guidée, en étant éloignée de la première douille (7'), dans un alésage traversant (12) du corps de base formant boîtier (2) et **en ce qu'**il est prévu, serré entre la seconde douille (7") et le corps de siège de valve (9), un ressort de rappel (13) qui positionne la valve à électro-aimant dans la position de base ouverte dans l'état sans courant électrique.

8. Valve à électro-aimant suivant la revendication 1, **caractérisée en ce que** la culasse annulaire (1) est réalisée en deux parties, une première partie de culasse annulaire (1') qui fait face au corps de base formant boîtier (2) étant appliquée axialement par une première surface de contact (A1) sur le corps de réception de valve (3) et ce que la première partie de culasse annulaire (1') est appliquée par une seconde surface de contact (A2) dirigée radialement soit sur le corps de base formant boîtier (2) en vue du fonctionnement d'une valve à électro-aimant ouverte en l'absence de courant en position de base, soit sur le manchon de valve (4) en vue du fonctionnement d'une valve à électro-aimant fermée en l'absence de courant en position de base.

9. Valve à électro-aimant suivant la revendication 8, **caractérisée en ce qu'**une seconde partie de culasse annulaire (1") est posée sur la première partie de culasse annulaire (1') d'une manière telle qu'une surface de contact (F1) de cette seconde partie, dirigée axialement, est appliquée sur la première partie de culasse annulaire (1') et **en ce que** la seconde partie de culasse annulaire (1") est appliquée par une autre surface de contact (F2) dirigée radialement soit sur le manchon de valve (4) en vue du fonctionnement d'une valve à électro-aimant ouverte en l'absence de courant en position de base, soit sur le noyau d'électro-aimant (5) fermant le manchon de valve (4) en vue du fonctionnement d'une valve à électro-aimant fermée en l'absence de courant en position de base.

10. Valve à électro-aimant suivant la revendication 1, **caractérisée en ce que**, pour la réalisation d'une valve à électro-aimant ouverte en l'absence de courant en position de base, le manchon de valve (4) fixé sur le corps de base formant boîtier (2) constitue avec l'armature mobile d'électro-aimant (8) se trouvant dans ce manchon un sous-groupe pouvant être manipulé en propre.

11. Valve à électro-aimant suivant la revendication 1, **caractérisée en ce qu'**en vue de la réalisation d'une valve à électro-aimant fermée en l'absence de courant dans la position de base, le noyau d'électro-aimant (5) est assemblé avec le manchon de valve (4) et l'armature mobile d'électro-aimant (8) pour donner un sous-groupe structurel pouvant être manipulé en propre, en constituant une unité de pré assemblage.

12. Valve à électro-aimant suivant la revendication 11, **caractérisée en ce que** le noyau d'électro-aimant (5) est emboîté à force dans le manchon de valve (4) et est rendu solidaire d'une manière inséparable de préférence au moyen d'un soudage.

13. Valve à électro-aimant suivant la revendication 1, **caractérisée en ce que** le corps de siège de valve (9) est assemblé avec le corps de base formant boîtier (2) pour donner un sous-groupe structurel pouvant être manipulé en propre, en constituant une unité de pré-assemblage pour une valve à électro-aimant fermée en l'absence de courant dans la position de base.

14. Valve à électro-aimant suivant la revendication 9, **caractérisée en ce qu'**après l'assemblage, les deux parties de culasse annulaire (1', 1") sont entourées avec un assemblage sous pression et une immobilisation en position par une masse d'injection en vue de la fermeture de flux magnétique.

15. Valve à électro-aimant suivant la revendication 1, **caractérisée en ce que**, dans un alésage traversant (12) ménagé entre le corps de base formant boîtier (2) et le corps de siège de valve (9), un piston de commutation (14) dépendant d'une différence de pression et pourvu d'un trou d'étranglement est disposé d'une manière mobile axialement.

16. Valve à électro-aimant suivant la revendication 15, **caractérisée en ce que** le piston de commutation (14) est guidé sur un tronçon de tige (15) du corps de siège de valve (9) qui dirige le siège de valve d'une manière concentrique vers la tige-poussoir (6) comportant l'obturateur de valve.

17. Valve à électro-aimant suivant la revendication 16, **caractérisée en ce qu'**entre le tronçon de tige (15) et le corps de siège de valve (9), une gorge annulaire (16) est prévue pour loger un empilement d'étanchéité (17).

18. Valve à électro-aimant suivant la revendication 17, **caractérisée en ce qu'**un conduit d'agent de pression (18) mène dans la gorge annulaire (16) en vue de l'application d'une action hydraulique sur l'empilement d'étanchéité (17).

19. Valve à électro-aimant suivant la revendication 15, **caractérisée en ce que** le piston de commutation (14) est appliqué sous pression sur un empilement d'étanchéité (17) au moyen d'un ressort (19) prenant appui dans le corps de base formant boîtier (2).

20. Valve à électro-aimant suivant la revendication 15, **caractérisée en ce que** le piston de commutation (14) est réalisé sous forme d'un fourreau coulissant à paroi mince qui peut être appliqué dans l'alésage traversant (12) sur une plaquette (27) pourvue d'un étranglement.

21. Valve à électro-aimant suivant la revendication 17, **caractérisée en ce que** le corps de siège de valve (9) sert à loger l'empilement d'étanchéité (17) avec le piston de commutation (14) et le ressort (19) sous forme d'un sous-groupe structurel pré-assemblé pouvant être manipulé en propre.
